# EUROPÄISCHE PATENTANMELDUNG

(11) **EP 4 345 018 A2**
(43) Veröffentlichungstag der Anmeldung: **03.04.2024**
(21) Anmeldenummer: 24153338.9
(22) Anmeldetag: 21.09.2017
(51) Int. Cl.: B65B 51/14

(54) **SIEGELORGAN**

(30) Priorität: 21.09.2016 DE 102016117834
(62) Teilanmeldung aus: 20020306.5
(71) Anmelder: watttron GmbH, 01705 Freital (DE)
(72) Erfinder: BACH, Sascha, 01705 Freital (DE); STEIN, Marcus, 01705 Freital (DE)
(74) Vertreter: Lippert Stachow Patentanwälte Rechtsanwälte Partnerschaft mbB

(57) **Zusammenfassung**

Die Erfindung betrifft ein Siegelorgan zum thermischen Verbinden thermoplastischer Materialien, umfassend ein Heizelement, das ein flächiges Trägersubstrat mit einer Vorderseite und einer Rückseite aufweist, das aus einem elektrisch nichtleitenden keramischen Werkstoff besteht. Auf dessen Vorderseite sind mindestens zwei Heizleiter angeordnet und von der Rückseite des Trägersubstrats her durch das Trägersubstrat hindurch über senkrechte Durchkontaktierungen, umfassend Durchgangsbohrungen, deren Begrenzungsfläche mit elektrisch leitendem keramischem Material beschichtet sind oder die von elektrisch leitendem keramischem Material ausgefüllt sind, elektrisch kontaktiert. Mindestens zwei Heizleiter sind unabhängig voneinander ansteuerbar.

## Beschreibung

Die Erfindung betrifft ein Siegelorgan zum Siegeln, d.h. zum stoffschlüssigen Verbinden, von Kunststoffen, vorrangig für die Herstellung von Verpackungen aus thermoplastischen Materialien wie Kunststofffolien oder Folienverbunde wie beispielsweise mit metallischen und nichtmetallischen Werkstoffen beschichtete Kunststofffolien, mit thermoplastischem Kunststoff beschichteten Metallfolien wie Aluminiumfolie und dergleichen, beispielsweise bei der Herstellung von Schlauchbeuteln, dem Verschließen von Behältern, beispielsweise durch das Aufsiegeln von Kunststofffolie mit oder ohne Aluminiumbeschichtung, kunststoffbeschichteter Aluminiumfolie oder andere thermisch schweißbare Materialien auf Behälter aus Kunststoff mit oder ohne Beschichtung oder aus Aluminium mit Kunststoffbeschichtung, oder die Versiegelung/Verschweißung von Folien oder Folienverbunden der oben genannten Art.

Beim Siegeln kommen üblicherweise dauerbeheizte Siegelwerkzeuge zum Einsatz. Diese bestehen in der Regel aus einer Heizpatrone (gewickelter Widerstandsleiter) und einem Grundkörper, in dem die Heizpatrone sowie ein für die Temperaturregelung erforderlicher Temperaturfühler integriert sind. Dieser meist metallische Grundkörper (Siegelbalken, Siegelkopf oder Siegelwerkzeug genannt) weist zudem in der Regel eine Kontur auf, die der zu siegelnden Kontur entspricht. Diese kann als schmaler Steg oder auch als komplexe 3-dimensionale Oberflächenstruktur (z.B. Riffelprofilierung oder Pyramidenstümpfe, etc.) ausgebildet sein. Da prinzipbedingt der Ort der Wärmeerzeugung (Heizpatrone) und der Wirkstelle (Siegelkontur) sowie der Ort der Temperaturmessung in der Regel einige Millimeter voneinander getrennt sind und die Einzelkomponenten (Heizpatrone und Temperaturfühler) ein Verzögerungsverhalten (PT1 mit Zeitkonstante von teils einigen Sekunden) aufweisen, können im getakteten Dauerbetrieb größere Temperaturschwankungen infolge der thermischen Trägheit des Gesamtsystems auftreten, die sich negativ auf die Qualität der Siegelung auswirken. Dies tritt insbesondere dann ein, wenn ein Start-Stopp-Betrieb vorherrscht und dieses veränderliche Last-bzw. Systemverhalten nicht oder unzureichend durch die Temperaturregelung kompensiert werden kann. Die große thermische Masse des gesamten Aufbaus (insbesondere des metallischen Grundkörpers) macht weiterhin einen komplexen Aufbau zur thermischen Entkopplung erforderlich, woraus größere Baugruppen resultieren. Weiterhin führt die Erwärmung der metallischen Bauteile in Verbindung mit dem vergleichsweise großen Wärmeausdehnungskoeffizienten zu einer deutlichen Längen- bzw. Umfangszunahme was zu Planparallelitätsabweichungen der Werkzeuge führt oder entsprechend große Abstände zu relativ dazu bewegten Bauteilen (beispielsweise möglichst dicht geführten Stanzmessern zur Materialeinsparung) erforderlich macht.

Es existieren Heizpatronen mit integrierten Temperatursensoren, diese lösen das geschilderte Problem allerdings nur unzureichend, da nicht wie erforderlich unmittelbar an der Wirkstelle oder möglichst nahe an der Wirkstelle, sondern mit einigem Abstand gemessen wird. Zudem führen die großen thermischen Massen der Siegelorgane zu trägem Regelverhalten. Weiterhin existieren Dickschichtheizer auf Metallbasis. Diese ermöglichen durch dünne aufgedruckte keramische Heiz- und Sensor-Leiterbahnen eine wirkstellennahe Temperaturmessung und Wärmeerzeugung, sind jedoch nur als ebene Siegelwerkzeuge herstellbar. Weitere Nachteile dieser bekannten Heizer bestehen darin, dass die Leiterbahnen an der Vorderseite des Heizers kontaktiert werden müssen und dass weder die Einstellung eines Temperaturprofils noch eine ortsabhängig variable Ansteuerung möglich ist.

Einige Aspekte der vorliegenden Erfindung betreffen ein Siegelorgan, bei dem wärmeerzeugende Elemente eines Heizelements von dessen Rückseite her kontaktiert sind. Weitere Aspekte betreffen ein Siegelorgan, bei dem der Ort der Wärmeerzeugung und der Ort der Wärmeabfuhr (d.h. die Wirkstelle) möglichst nah beieinander angeordnet sind. Weitere Aspekte betreffen ein Siegelorgan mit einem Heizelement, das einen integrierten Temperatursensor aufweist. Weitere Aspekte betreffen ein Siegelorgan mit einer definierten Siegelkontur. Weitere Aspekte betreffen ein Siegelorgan mit einer dreidimensional strukturierten Kontaktfläche. Weitere Aspekte betreffen ein Siegelorgan mit einem kreisrunden, ringförmigen oder streifenförmigen Heizelement. Weitere Aspekte betreffen ein Siegelorgan mit integrierten Elektronikschaltungen. Weitere Aspekte betreffen ein Siegelorgan mit der Möglichkeit, das Heizelement und/oder das zu verschweißende Material bedarfsweise zu kühlen. Weitere Aspekte betreffen ein Siegelorgan mit der Möglichkeit, das zu schweißende Material anzusaugen.

Es hat sich gezeigt, dass die hier vorgeschlagenen Lösungen zu jedem Aspekt der Erfindung vorteilhaft sowohl jeweils einzeln als auch in beliebiger Kombination miteinander zur Verbesserung bekannter Siegelorgane beitragen können, und jede Kombination eines oder mehrerer der nachfolgend beschriebenen Merkmale mit denen bekannter Siegelorgane soll daher als vom Erfindungsgedanken umfasst angesehen werden.

Die Erfindung geht von einem Siegelorgan zum thermischen Verbinden thermoplastischer Materialien aus, das ein Heizelement umfasst, welches ein flächiges Trägersubstrat mit einer Vorderseite und einer Rückseite aufweist, das aus einem elektrisch nichtleitenden keramischen Werkstoff besteht, und auf dessen Vorderseite mindestens ein Heizleiter angeordnet ist.

Gemäß einer Ausgestaltung ist bei dem vorgeschlagenen Siegelorgan vorgesehen, dass der mindestens eine Heizleiter von der Rückseite des Trägersubstrats her durch das Trägersubstrat hindurch elektrisch kontaktiert ist.

Unter einem flächigen Trägersubstrat soll dabei ein plattenförmiges Element verstanden werden, d.h. ein Element, dessen Dickenabmessung klein ist gegenüber den Abmessungen in den beiden anderen Raumrichtungen, wobei es unerheblich ist, ob das Trägersubstrat insgesamt eben oder gebogen oder gewölbt ist. Allerdings besteht einer der Vorzüge des vorgeschlagenen Siegelorgans gerade darin, dass das keramische Trägersubstrat nicht nur eben, sondern auch gebogen oder gewölbt ausgeführt sein kann.

Das Trägersubstrat kann beispielsweise die Form eines Quadrats oder anderen Polygons, eines Streifens, d.h. schmalen Rechtecks, kreis- oder ellipsenförmige Scheibe oder als Ring, der ebenfalls die äußere Form eines Polygons, Kreises usw. aufweisen kann, ausgeführt sein. Dadurch ist es möglich, ein Siegelorgan mit einem Heizelement bereitzustellen, mit dem unterschiedlichste Siegelanwendungen und Nahtformen realisiert werden können.

Die Vorderseite des Trägersubstrats weist einen oder mehrere darauf angeordnete Heizleiter auf, die beispielsweise in einer Ebene (nebeneinander) oder in mehreren Ebenen (übereinander) angeordnet sein können, d.h. die Vorderseite des Heizelements ist dem zu siegelnden Material zugewandt.

Zur Kontaktierung des oder der auf der Vorderseite des Trägersubstrats angeordneten Heizleiter von der Rückseite des Trägersubstrats her kann das Trägersubstrat beispielsweise sogenannte VIAs (Vertical Interconnect Access, Bezeichnung für senkrechte Durchkontaktierungen zwischen den Schichten einer integrierten Schaltung oder einer Leiterplatte), also elektrische Leiterzüge, die sich zwischen einer Vorderseite und einer Rückseite des Trägersubstrats in der Dickenrichtung des Trägersubstrats durch das Trägersubstrat hindurch erstrecken, aufweisen. Beispielsweise kann das Trägersubstrat hierzu kleine Löcher in der Form von Durchgangsbohrungen aufweisen, deren Begrenzungsfläche mit elektrisch leitendem Material beschichtet sind oder die von elektrisch leitendem Material ausgefüllt sind.

Das elektrisch leitende Material kann dabei beispielsweise eine druckbare elektrisch leitende Paste, beispielsweise eine mit elektrisch leitenden Partikeln versetzte Keramikmasse (Schlicker) sein. Zur elektrischen Kontaktierung eines Heizleiters kann beispielsweise das auf der Rückseite des Trägersubstrats liegende Ende des VIAs direkt kontaktiert sein, beispielsweise durch Federkontakte, Anlöten, Anschweißen oder Anschrauben usw.

Gemäß einer Ausgestaltung ist bei dem vorgeschlagenen Siegelorgan vorgesehen, dass auf der Vorderseite des Trägersubstrats mindestens ein Sensorleiter zur Temperaturmessung angeordnet ist. Durch die so erreichte unmittelbare Nähe eines Sensorleiters zu einem Heizleiter wird der Sensorleiter fast identisch zum Heizleiter erwärmt. Aus der temperaturabhängigen Änderung des elektrischen Widerstands des Sensorleiters lässt sich damit auf einfache Weise die Temperatur des Heizelements ermitteln. Dieser Temperaturwert kann bequem zur Steuerung oder Regelung des Heizelements verwenden.

Gemäß einer anderen Ausgestaltung ist bei dem vorgeschlagenen Siegelorgan vorgesehen, dass mindestens ein Heizleiter gleichzeitig als Sensorleiter dient, indem der sich mit der Temperatur ändernde elektrische Widerstand des Heizleiters selbst zur Ermittlung der Temperatur des Heizelements dient. Auch hier kann der so ermittelte Temperaturwert zur Steuerung oder Regelung des Heizelements verwendet werden.

Die Verwendung der Leiterbahnen, d.h. des Heizleiters selbst oder eines dedizierten Sensorleiters, hat den weiteren Vorteil, dass die Widerstandsänderung bei Temperaturänderung aufgrund der geringen Schichtdicke von beispielsweise 5 bis 20pm und der daraus resultierenden geringen thermischen Masse sehr schnell erfolgt und dadurch eine schnelle Reaktion der Regelung ermöglicht wird, die sehr kleine Regelabweichungen ermöglicht.

Der mindestens eine Heizleiter sowie, falls vorhanden, der mindestens eine Sensorleiter können vorteilhaft durch eine Dickschicht-Drucktechnologie hergestellt sein, die kostengünstig ist und es auch ermöglicht, Heizleiter und Sensorleiter entweder in einem Arbeitsschritt oder jedenfalls in Arbeitsschritten ein und desselben Verfahrens herzustellen. Besonders vorteilhaft können der oder die Heizleiter sowie, falls vorhanden, der oder die Sensorleiter aus einem elektrisch leitenden keramischen Werkstoff bestehen. Hierzu kann in einem Druckverfahren ein elektrisch leitender Keramikschlicker in Form von Leiterbahnen auf ein elektrisch nichtleitendes flächiges Keramiksubstrat, das zu diesem Zeitpunkt beispielsweise als Grünling, aber auch als gebrannte Keramik vorliegen kann, gedruckt werden. Dabei kann gleichzeitig die Durchkontaktierung des oder der der Heizleiter oder/und des oder der Sensorleiter erfolgen, indem beim Drucken der Schlicker auch in Löcher oder Bohrungen des Trägersubstrats injiziert wird, so dass VIAs geschaffen werden, die der elektrischen Kontaktierung der Heizleiter oder/und der Sensorleiter von der Rückseite des Trägersubstrats her dienen können. Nach einem anschließenden Trocknungsschritt kann dann das mit keramischen Leiterbahnen bedruckte Keramiksubstrat wie gewöhnlich gebrannt werden.

Weiterhin kann vorgesehen sein, dass das Trägersubstrat mindestens eine Luftströmungsöffnung zum Ausstoßen oder Ansaugen von Luft aufweist. Beispielsweise können Luftströmungsöffnungen vorgesehen sein, durch die Kühlluft von der Rückseite des Heizelements zur Vorderseite des Heizelements geleitet wird, um das Heizelement sowie gegebenenfalls das verschweißte Material nach einem erfolgten Siegelvorgang schnell abzukühlen. Weiter beispielsweise können Luftströmungsöffnungen vorgesehen sein, durch die Umgebungsluft von der Vorderseite des Heizelements zur Rückseite des Heizelements geleitet wird, um das zu verschweißende Material, also beispielsweise eine Kunststofffolie, an das Heizelement zu saugen, um den thermischen Kontakt zwischen dem Siegelorgan und dem zu verschweißenden Material zu erhöhen und so das Resultat des Schweißvorgangs zu verbessern.

Gemäß einer weiteren Ausgestaltung ist vorgesehen, dass die Vorderseite des Heizelements dreidimensional erhabene Strukturen aufweist. Dadurch ist es möglich, einerseits die Wärmeeinwirkung des Siegelorgans auf das zu verschweißende Material zu intensivieren, um eine innige Verbindung zu bewirken, und andererseits, strukturierte Schweißnähte zu schaffen.

Hierfür kann beispielsweise vorgesehen sein, dass der mindestens eine Heizleiter oder/und der mindestens eine Sensorleiter eine dreidimensional erhabene Struktur bildet.

Werden diese Leiterbahnen in einem Dickschicht-Druckverfahren, zur Erzielung einer größeren Dicke der Leiterbahnen gegebenenfalls in mehreren aufeinanderfolgenden Druckschritten, hergestellt, so sind die entstehenden Leiterbahnen gegenüber der Oberfläche des Trägersubstrats merklich erhaben und können daher direkt als dreidimensional erhabene Strukturen im obigen Sinne wirken.

Alternativ oder zusätzlich kann vorgesehen sein, dass auf dem Trägersubstrat oder/und auf dem mindestens einen Heizleiter oder/und auf dem mindestens einen Sensorleiter ein flächiges Konturelement angeordnet ist, das eine dreidimensional erhabene Struktur bildet. Ein solches Konturelement kann beispielsweise entweder einstückig mit dem Trägersubstrat ausgebildet sein, oder selbst in einem Dickschicht-Druckverfahren hergestellt werden, indem eine Schicht aus gut wärmeleitendem Schlicker entweder direkt auf das Trägersubstrat oder über die Leiterbahnen gedruckt wird. Ein solches Konturelement kann aber beispielsweise auch, ähnlich wie das Trägersubstrat, vorgefertigt sein und nach dem Drucken und Trocknen der Leiterbahnen beispielsweise als Grünling oder als bereits gebrannte Keramik entweder mittels einer auf der Vorderseite des Trägersubstrats und den darauf angeordneten Leiterbahnen aufgebrachten Schicht aus Schlicker auf die Vorderseite des Trägerelements aufgeklebt werden oder auf die Vorderseite des Trägersubstrats und die darauf angeordneten Leiterbahnen beispielsweise mit einem Glaslot aufgelötet werden. Bei der letztgenannten Variante ist es besonders einfach, ein Konturelement bereitzustellen, das seinerseits an der Vorderseite dreidimensional strukturiert ist. Daran anschließend kann das neben dem Trägersubstrat und der oder den keramischen Leiterbahnen ein Konturelement umfassende Heizelement wie gewöhnlich gebrannt werden. Bei Ausgestaltungen, bei denen das Konturelement gleichzeitig das Element ist, das in direkten Kontakt mit dem zu verschweißenden Material tritt, und bei denen der oder die Heizleiter unter dem Konturelement angeordnet oder in dieses eingebettet sind, sollte das Material des Konturelements elektrisch nichtleitend sein, um Kurzschlüsse zu vermeiden.

Weiterhin kann vorgesehen sein, dass das Konturelement mindestens eine Luftströmungsöffnung zum Ausstoßen oder Ansaugen von Luft aufweist. Die Position derartiger Luftströmungsöffnungen sollte dabei zweckmäßig so gewählt sein, dass sie bei der Erzeugung oder/und Anbringung des Konturelements über entsprechenden Luftströmungsöffnungen des Trägersubstrats zu liegen kommen, um die Durchleitung von Luft von der Rückseite zur Vorderseite oder von der Vorderseite zur Rückseite des Heizelements zu ermöglichen. Wie oben bereits beschrieben wird es dadurch ermöglicht, das Heizelement und gegebenenfalls das verschweißte Material schnell abzukühlen bzw. das zu verschweißende Material anzusaugen.

Alternativ oder zusätzlich kann vorgesehen sein, dass das Konturelement mindestens eine oberflächliche Vertiefung zum Ableiten von Luft aufweist. Werden das Trägersubstrat und das Konturelement mit übereinander liegenden Luftströmungsöffnungen versehen, so können die Vertiefungen beispielsweise zur Ableitung von Kühlluft dienen, die von der Rückseite des Heizelements her an der Vorderseite des Heizelements ausgelassen wird. Beispielsweise kann ein ringförmiges Heizelement zum Aufsiegeln von Deckelfolie auf einen Verpackungsbecher an seiner Vorderseite radial verlaufende Nuten aufweisen, durch die Kühlluft abgeleitet wird. Es ist jedoch auch möglich, das Trägersubstrat an Stellen, die nicht von dem Konturelement bedeckt sind, mit Luftströmungsöffnungen zu versehen. Am obigen Beispiel erläutert könnte das Trägersubstrat kreisförmig und das Konturelement ringförmig sein. Weist dann das Trägersubstrat in einem zentralen, nicht vom Konturelement überdeckten Bereich Luftströmungsöffnungen auf, so kann die dadurch an der Vorderseite des Heizelements austretende Kühlluft durch die vorderseitig angebrachten Nuten des Konturelements nach außen abgeführt werden, wobei die erwärmten Bereiche des Heizelements, d.h. die Leiterbahnen und das Konturelement selbst, durch die vorbeiströmende Kühlluft gekühlt werden.

Bevorzugt besteht das Konturelement aus einem elektrisch nichtleitenden keramischen Werkstoff mit guter Wärmeleitfähigkeit. Dadurch wird ein Kurzschluss zwischen den darunter liegenden Leiterbahnen vermieden, wobei die von dem oder den Heizleitern erzeugte Wärme sich jedoch gleichmäßig im Konturelement verteilt.

Weiter vorteilhaft kann vorgesehen sein, dass das Heizelement an seiner Rückseite durch Federkontakte elektrisch kontaktiert ist. Auf diese Weise kann ein Heizelement an einem Siegelorgan einfacher und schneller ausgetauscht werden, als dies bei einer permanenten elektrischen Kontaktierung, beispielsweise durch angelötete Leitungen, der Fall wäre. Dennoch sind vom Erfindungsgedanken natürlich auch Ausgestaltungen umfasst, bei denen die elektrische Kontaktierung des Heizelements auf andere Weise, beispielsweise durch Steckkontakte, Löten oder Schweißen, beispielsweise Drahtbonden, realisiert ist.

Zur Anbringung des vorgeschlagenen Heizelements an einem Siegelorgan kann weiterhin vorgesehen sein, dass das Heizelement mit seiner Rückseite an einem Befestigungskörper angebracht ist. Dabei kann die Verbindung zwischen Heizelement und Befestigungskörper vorteilhaft lösbar ausgeführt sein. Da das keramische Trägersubstrat sehr dünn gestaltet sein kann, erhält das Heizelement durch einen derartigen Befestigungskörper eine höhere Stabilität, wobei der Befestigungskörper gleichzeitig die elektrische Kontaktierung des Heizelements bereitstellen und die Anbringung des Heizelements an einem Siegelorgan ermöglichen kann, wobei die Verbindung zwischen Befestigungskörper und Siegelorgan vorteilhaft ebenfalls lösbar ausgeführt ist.

In einer weiteren Ausgestaltung kann vorgesehen sein, dass der Befestigungskörper Bestandteil eines Gehäuses ist, das zur Anbringung an einer Verpackungsmaschine ausgebildet ist. In diesem Fall umfasst das Siegelorgan also neben dem Heizelement und dem Befestigungskörper, an dem das Heizelement angebracht ist, ein Gehäuse, an dem der Befestigungskörper angebracht ist. Das Gehäuse ist zur Anbringung an einer Verpackungsmaschine ausgebildet, so dass das Siegelorgan von der Verpackungsmaschine zumindest mit Strom, gegebenenfalls auch mit Kühlluft oder/und Unterdruck versorgt werden kann.

Wenn das Siegelorgan, wie oben beschrieben, ein Gehäuse aufweist, so kann dieses vorteilhaft dazu genutzt werden, dass im Innern des Gehäuses eine Steuerungselektronik oder/und eine Leistungselektronik angeordnet ist. Dadurch ist das Siegelorgan autark einsetzbar, d.h. die Verpackungsmaschine selbst muss weder die Steuerung oder Regelung des Siegelorgans bewirken noch die benötigte Spannung bereitstellen, weil dies von dem Siegelorgan selbst bewerkstelligt wird. Über die Verpackungsmaschine muss nur noch die allgemeine Energieversorgung, beispielsweise mit einer Versorgungsspannung, gegebenenfalls Druckluft oder/und Unterdruck, und gegebenenfalls die Definition bestimmter, für den Siegelvorgang benötigter Sollgrößen wie beispielsweise die Solltemperatur und die Einwirkzeit des Siegelorgans auf das zu verschweißende Material, zur Verfügung gestellt werden. Das Gehäuse kann dabei für unterschiedlichste Siegelorgane jeweils gleichartig ausgeführt sein, so dass Verpackungsmaschinen, an denen diese Siegelorgane eingesetzt werden sollen, lediglich eine stets gleichartige Schnittstelle bereitstellen müssen, die zur Anbringung des Gehäuses des Siegelorgans ausgebildet ist.

In verschiedenen Ausgestaltungen des vorgeschlagenen Siegelorgans kann vorgesehen sein, dass mindestens zwei Heizleiter mit gleichem Abstand zum Trägersubstrat angeordnet sind. Hierdurch können mehrere Heizleiter auf derselben Ebene dargestellt werden, die jeweils nur einen Teilabschnitt des Heizelements beheizen. Dadurch ist es möglich, über die Oberfläche, d.h. die Vorderseite des Heizelements ein Temperaturprofil einzustellen, indem verschiedene Heizleiter unterschiedlich angesteuert werden.

Alternativ oder zusätzlich kann vorgesehen sein, dass mindestens zwei Heizleiter mit unterschiedlichem Abstand zum Trägersubstrat angeordnet sind. Beispielsweise kann zunächst ein erster Heizkreis auf das Trägersubstrat aufgebracht, beispielsweise gedruckt werden, anschließend eine Trennschicht über die Vorderseite des Trägersubstrats mit dem ersten Heizleiter aufgebracht, beispielsweise gedruckt werden und schließlich ein zweiter Heizleiter auf das Trägersubstrat aufgebracht, beispielsweise gedruckt werden. Hierdurch ist es beispielsweise möglich, dass eine hohe Heizleistung erzielt wird, wobei der erste und der zweite Heizleiter einander auch kreuzen können, ohne dass ein Kurzschluss zwischen ihnen auftreten kann.

In ähnlicher Weise kann vorgesehen sein, dass mindestens ein Heizleiter und ein Sensorleiter mit gleichem Abstand zum Trägersubstrat angeordnet sind, oder/und dass mindestens ein Heizleiter und ein Sensorleiter mit unterschiedlichem Abstand zum Trägersubstrat angeordnet sind.

In einer weiteren Ausgestaltung kann bei dem vorgeschlagenen Siegelorgan vorgesehen sein, dass mindestens ein Heizleiter spulenförmig ausgebildet und mit einer Wechselspannung beaufschlagbar ist. Auf diese Weise entsteht ein induktives Wechselfeld, das bei metallhaltigem zu verschweißendem Material wie beispielsweise Aluminiumverbundfolie zu einer alleinigen oder zusätzlichen Erwärmung des zu verschweißenden Materials führt.

Schließlich kann vorteilhaft vorgesehen sein, dass mindestens zwei Heizleiter unabhängig voneinander ansteuerbar sind. Hierdurch kann je nach der Anordnung der zwei oder mehr Heizleiter zueinander bewirkt werden, dass das Heizelement über seine Vorderseite gesehen ein einstellbares Temperaturfeld erzeugt oder einen Ausgleich von unterschiedlich starker Wärmeabfuhr durch Einstellung eines sehr gleichmäßigen Temperaturprofiles über eine größere Fläche ermöglicht, dass die Heizleistung wählbar größer oder kleiner ist, usw.

Die Erfindung beschreibt verschiedene Ausführungen von Siegelorganen mit Heizelementen, bei denen dünne keramischen Heizleiter in Dickschichttechnik auf dünne Keramiksubstrate (beispielsweise mit einer Dicke von 1 mm oder weniger) aufgebracht sind. Diese durch gezielte Bahnführung zu Heizflächen gestaltbaren Heizbahnen besitzen selbst nur eine sehr geringe thermische Masse und eine sehr hohe Leistungsdichte (bis über 50 W/cm²), was eine sehr hohe Aufheizdynamik erlaubt. Weiterhin können ebenfalls sehr dynamische Temperaturfühler integriert werden, was eine sehr hohe Regelgenauigkeit ermöglicht. Die Heizer können als Platten, Streifen, Scheiben oder Ringe ausgeführt sein und somit an die Geometrie der zu siegelnden Fläche angepasst werden. Weiterhin können ein oder mehrere nebeneinander oder versetzt zueinander segmentweise angeordnete Heizkreise realisiert werden, um mit jeweils separater Regelung eine definierte Temperaturverteilung an der Wirkstelle zu erzeugen. Die Heizleiterbahnen können zudem in mehreren Ebenen angeordnet sein oder/und spulenartig ausgeführt sein, so dass bei Anlegen einer Wechselspannung ein Magnetfeld entsteht, das den Siegelvorgang von aluminiumhaltigen Folien verbessert.

Eine weitere Besonderheit der Erfindung stellt die mögliche Anbindung des flachen Heizelements (Scheibe, Ring oder Streifen) im Bereich der Wirkstelle an die Siegelfläche/Wirkstelle durch ein weiteres dünnes (beispielsweise ca. 1 mm dickes) keramisches oder metallisches Bauteil, nämlich ein die Siegelkontur aufweisendes Konturelement, mit hoher Wärmeleitfähigkeit dar. Geeignete Materialien hierfür sind beispielsweise Aluminiumnitrid (AlN) oder Siliciumcarbid (SiSiC oder SSiC). Über dieses sind der unmittelbare Wärmeeintrag sowie die Ausbildung der erforderlichen (3-dimensionalen) Siegelkontur möglich. Dieses Konturelement kann erfindungsgemäß mittels Kleben, Löten oder Ansintern mit der Oberfläche des Dickschichtheizers stoffschlüssig verbunden werden.

Des Weiteren kann das Heizelement auf einen thermisch isolierenden Grundträger (aus Keramik oder hochtemperaturbeständigen Kunststoff) durch Kleben oder eine kraftschlüssige Verbindung (Klemmen, Schrauben) angebracht werden. Dies wirkt sich besonders positiv hinsichtlich geforderter thermischer Entkopplung zur dahinterliegenden mechanischen Anbindung des Siegelelements aus. Dazu können Befestigungselemente an das Heizelement stoffschlüssig angebracht werden, die eine Verschraubung oder Klemmung mit dem Grundträger und somit Austausch im Falle eines Defektes ermöglichen. Die Heizelemente selbst verfügen über eine Durchkontaktierung zur Rückseite des Heizersubstrats, an der die elektrische Kontaktierung mittels Federkontakten, Anlöten, Anschweißen, Anschrauben oder mechanischen Andrücken realisiert werden kann.

Eine weitere vorteilhafte Ausführungsform stellt die unmittelbare Integration von Regel- und Steuerelementen zu einem autark funktionierenden Siegelmodul dar. Dieses muss lediglich mit Energie versorgt und die Sollparameter vorgegeben werden. Diese Variante wirkt sich besonders positiv hinsichtlich einer kompakten Bauweise, einfachen Integration in eine Maschine und vereinfachten Wartung durch Austausch aus.

Vorteile des vorgeschlagenen Siegelorgans bezogen auf die technischen Merkmale bestehen dabei insbesondere im Folgenden:
- Geringe thermische Masse und hohe Aufheizdynamik ermöglichen in Verbindung mit einem entsprechend dynamischen Regler eine sehr hohe Regelgenauigkeit mit einer Regelabweichung von wenigen Kelvin (auch im Fall schwankender Lasten).
- Kompakte Ausführung des Heizelements und Integration von Regel- und Steuerelementen im Siegelorgan selbst ermöglicht kompakte Baugruppe mit guter thermischer Charakteristik.
- Geringe thermische Ausdehnungskoeffizienten der verwendeten Keramikbauteile bedingen bessere Maßhaltigkeit über ein breites Temperaturspektrum.
- Durch die thermische Isolation können erforderliche Regelkomponenten (Elektronik) direkt in das Siegelorgan integriert werden, was insbesondere bei Verwendung mehrerer separater Heizkreise (z.B. segmentweise) vorteilhaft ist und die elektrische Anbindung an die Maschine erleichtert.
- Durch die Verwendung mehrerer segmentweise nebeneinander oder übereinander angeordneter Heizkreise können Temperaturprofile bzw. Leistungsstufen dargestellt werden.
- Durch spulenartige Anordnung von Leiterschleifen, auch über mehrere Ebenen, wird bei Anlegen einer Wechselspannung ein Magnetfeld erzeugt, das in metallischen Komponenten in den Fügeteilen Wirbelströme erzeugt und dadurch zur alleinigen, oder gegenüber einer Wärmeleitung vom Heizelement zum zu verschweißenden Material hauptsächlichen, oder zusätzlichen inneren Erwärmung der Fügepartner führt.

Nachfolgend wird die Erfindung anhand von Ausführungsbeispielen und zugehörigen Zeichnungen näher erläutert. Dabei zeigen:
Fig. 1 ein Ausführungsbeispiel eines Siegelorgans mit einem Heizelement mit ringförmiger Siegelkontur,
Fig. 2 das Heizelement des Siegelorgans aus Fig. 1,
Fig. 3 eine beispielhafte Konfiguration der Leiterbahnen des Heizelements aus Fig. 2,
Fig. 4 ein Ausführungsbeispiel eines Siegelorgans mit einem Heizelement mit streifenförmiger Siegelkontur,
Fig. 5 das Heizelement des Siegelorgans aus Fig. 4, und
Fig. 6A und 6B beispielhafte Konfigurationen der Leiterbahnen des Heizelements aus Fig. 5.

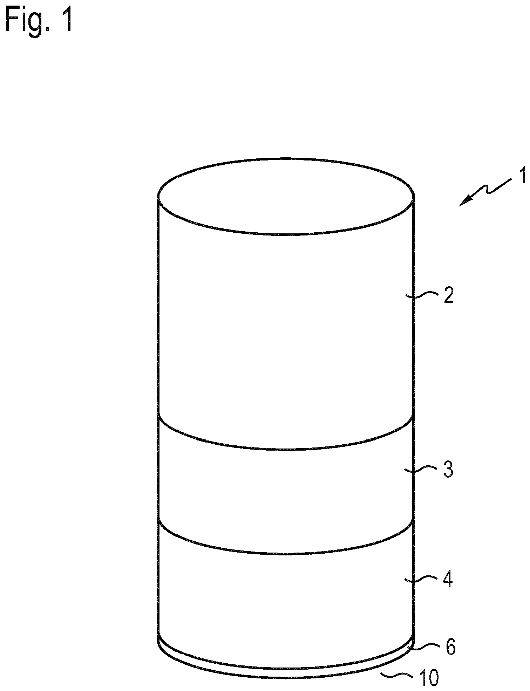

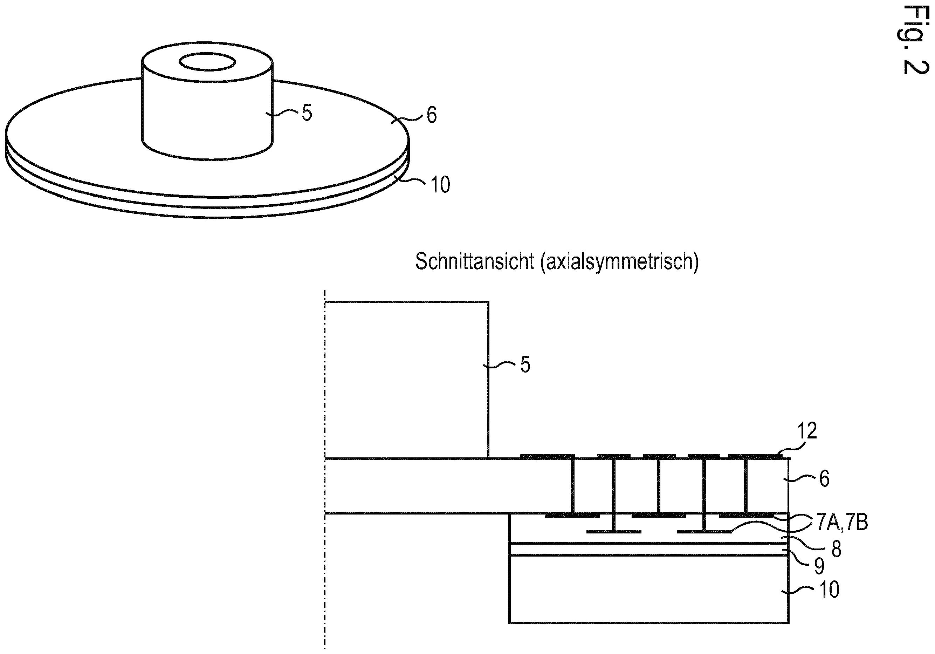

Fig. 1 zeigt eine Gesamtansicht eines Siegelorgans 1 mit einer ringförmigen Siegelkontur. An einem Gehäuse 2, das eine Leistungs- und Regelelektronik enthält, ist ein Adapter 3 angebracht, der seinerseits einen Isolationskörper 4 trägt. An der Unterseite des Isolationskörpers ist ein kreisförmiges Trägersubstrat 6 eines Heizelements angeordnet. Wie aus Fig. 2 ersichtlich ist, ist das Trägersubstrat 6 an einem Befestigungskörper 5 angebracht, der seinerseits in dem Isolationskörper 4 gehalten ist. Das Trägersubstrat 6 weist an seiner Vorderseite (in der Zeichnung die Unterseite des Trägersubstrats) Leiterbahnen 7 auf, die als Heizleiter 7A oder Sensorleiter 7B ausgebildet sein können, wobei mehrere Leiterbahnen 7 nebeneinander mit dem gleichen Abstand zum Trägersubstrat 6 angeordnet sind und die Leiterbahnen 7 in zwei Ebenen, also mit zwei verschiedenen Abständen zum Trägersubstrat 6, angeordnet sind.

Alle Leiterbahnen 7 sind durch VIAs 13 durch das Trägersubstrat 6 durchkontaktiert, so dass sie von der Rückseite des Trägersubstrats 6 her elektrisch kontaktiert werden können.

Über den Leiterbahnen 7 ist eine Abdeckschicht 8 angeordnet, auf der ein ringförmiges Konturelement 10 mittels einer Verbindungsschicht 9 befestigt ist.

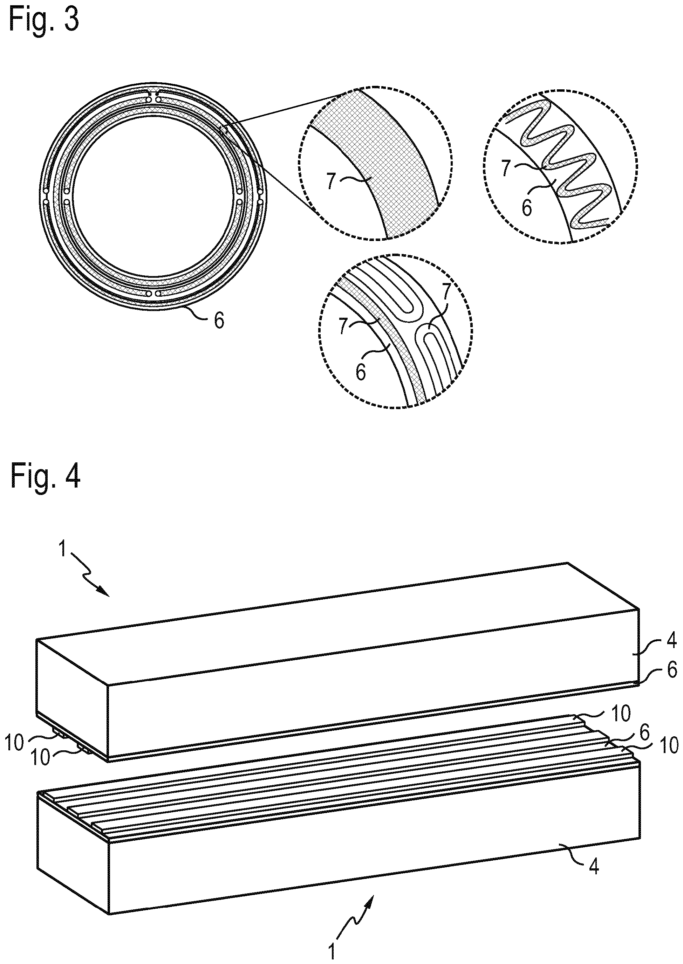

Fig. 3 zeigt beispielhaft, wie die Leiterbahnen 7 konfiguriert sein können. Es ist ersichtlich, dass Leiterbahnen 7 sowohl mit gleichem Abstand zum Trägersubstrat 6 nebeneinander als auch mit unterschiedlichem Abstand zum Trägersubstrat 6 übereinander und dabei auch einander überlappend angeordnet sein können.

Fig. 4 zeigt eine Gesamtansicht eines Paares von Siegelorganen 1 mit einer streifenförmigen Siegelkontur. Je ein Isolationskörper 4 trägt dabei ein Heizelement, das ein Trägersubstrat 6 mit darauf angeordneten Konturelementen 10 und Leiterbahnen 7 aufweist, und die Vorderseiten der beiden Heizelemente sind einander zugewandt.

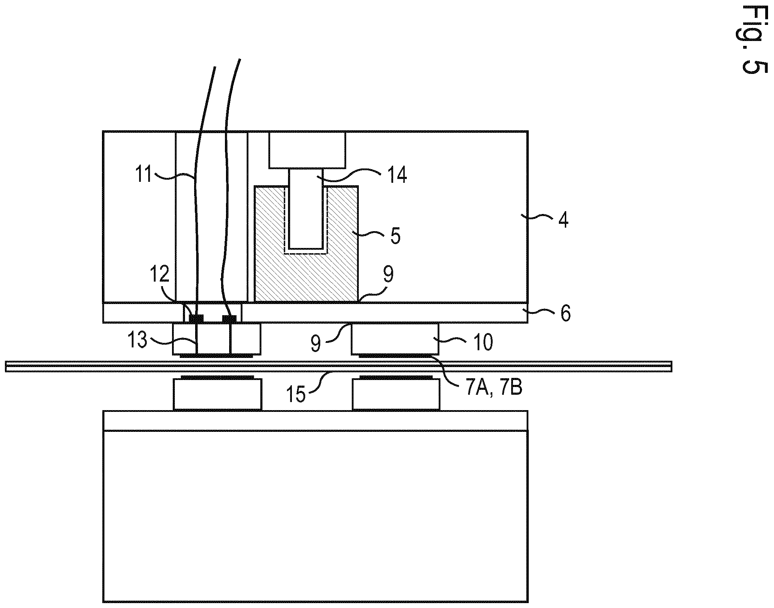

Aus Fig. 5 wird ersichtlich, dass das Trägersubstrat 6 mit seiner Rückseite durch eine Verschraubung 14 mit einem Befestigungskörper 5 verbunden ist, der seinerseits in dem Isolationskörper 4 befestigt ist.

Bei dieser Ausführungsform sind streifenförmige Konturelemente 10 direkt auf dem Trägersubstrat 6 angebracht, und auf jedem Konturelement 10 ist eine Leiterbahn 7 angeordnet, die hier als Heizleiter 7A ausgeführt ist. Die Heizleiter 7A sind daher mittels VIAs 13 sowohl durch das jeweilige Konturelement 10 als auch durch das Trägersubstrat 6 hindurchkontaktiert. An der Rückseite des Trägersubstrats 6 sind die VIAs an Kontaktstellen 12 durch Löten mit Anschlusskabeln 11 verbunden.

Die zwei Siegelorgane 1 sind einander so zugewandt, dass zu verschweißendes Material 15 zwischen ihnen hindurch geführt werden kann, wobei die beiden Siegelorgane 1 zum Verschweißen des Materials 15 aufeinander zu bewegt werden, bis sie das zu verschweißende Material 15 zwischen sich einschließen.

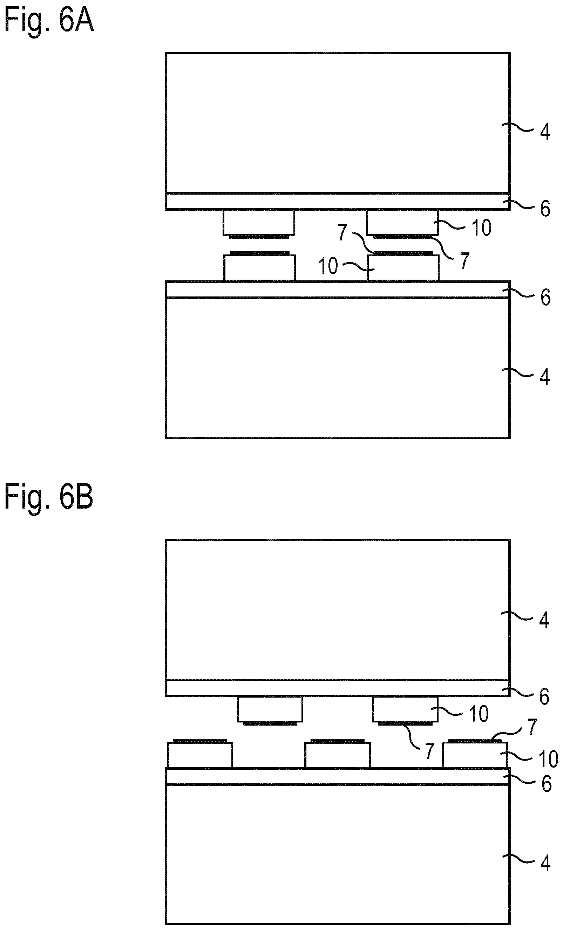

In den Figuren 6A und 6B sind zwei Varianten einer Paarung von Siegelorganen 1 dargestellt, bei denen die relative Anordnung der Konturelemente 10 und Leiterbahnen 7 unterschiedlich ist:
Während bei der Ausführungsform der Fig. 6A je eine Leiterbahn 7 beider Siegelorgane 1 an derselben Stelle angeordnet ist, so dass die gegenüberliegenden Leiterbahnen 7 gegeneinander drücken, sind bei der Ausführungsform der Fig. 6B die Leiterbahnen 7 versetzt zueinander so angeordnet, dass die Leiterbahnen 7 des einen Siegelorgans 1 zwischen zwei Leiterbahnen 7 des anderen Siegelorgans drücken.

### Siegelorgan

### Bezugszeichenliste

- 1: Siegelorgan
- 2: Gehäuse
- 3: Adapter
- 4: Isolationskörper
- 5: Befestigungskörper
- 6: Trägersubstrat
- 7: Leiterbahn

- 7A: Heizleiter
- 7B: Sensorleiter

- 8: Abdeckschicht
- 9: Verbindungsschicht
- 10: Konturelement
- 11: Anschlusskabel
- 12: Kontaktstelle
- 13: VIA
- 14: Verschraubung
- 15: zu verschweißendes Material

## Patentansprüche

1. Siegelorgan (1) zum thermischen Verbinden thermoplastischer Materialien (15), umfassend ein Heizelement, das ein flächiges Trägersubstrat (6) mit einer Vorderseite und einer Rückseite aufweist, das aus einem elektrisch nichtleitenden keramischen Werkstoff besteht, auf dessen Vorderseite mindestens zwei Heizleiter (7A) angeordnet und von der Rückseite des Trägersubstrats (6) her durch das Trägersubstrat (6) hindurch über senkrechte Durchkontaktierungen (13), umfassend Durchgangsbohrungen, deren Begrenzungsfläche mit elektrisch leitendem keramischem Material beschichtet sind oder die von elektrisch leitendem keramischem Material ausgefüllt sind, elektrisch kontaktiert sind, wobei mindestens zwei Heizleiter (7A) unabhängig voneinander ansteuerbar sind.

2. Siegelorgan nach Anspruch 1, bei dem auf der Vorderseite des Trägersubstrats (6) mindestens ein Sensorleiter (7B) zur Temperaturmessung angeordnet ist.

3. Siegelorgan nach Anspruch 1 oder 2, bei dem mindestens ein Heizleiter (7A) oder/und mindestens ein Sensorleiter (7B) durch eine Dickschicht-Drucktechnologie hergestellt ist.

4. Siegelorgan nach Anspruch 3, bei dem mindestens ein Heizleiter (7A) oder/und mindestens ein Sensorleiter (7B) aus einem elektrisch leitenden keramischen Werkstoff besteht.

5. Siegelorgan nach einem der vorherigen Ansprüche, bei dem das Trägersubstrat (6) mindestens eine Luftströmungsöffnung zum Ausstoßen oder Ansaugen von Luft aufweist.

6. Siegelorgan nach einem der vorherigen Ansprüche, bei dem die Vorderseite des Heizelements dreidimensional erhabene Strukturen aufweist.

7. Siegelorgan nach Anspruch 6, bei dem mindestens ein Heizleiter (7A) oder/und mindestens ein Sensorleiter (7B) eine dreidimensional erhabene Struktur bildet.

8. Siegelorgan nach Anspruch 6, bei dem auf dem Trägersubstrat (6) oder/und auf mindestens einem Heizleiter (7A) oder/und auf mindestens einem Sensorleiter (7B) ein flächiges Konturelement (10) angeordnet ist, das eine dreidimensional erhabene Struktur bildet.

9. Siegelorgan nach Anspruch 8, bei dem das Konturelement (10) mindestens eine Luftströmungsöffnung zum Ausstoßen oder Ansaugen von Luft oder/und mindestens eine oberflächliche Vertiefung zum Ableiten von Luft aufweist oder/und aus einem keramischen Werkstoff mit guter Wärmeleitfähigkeit besteht.

10. Siegelorgan nach einem der vorherigen Ansprüche, bei dem das Heizelement an seiner Rückseite durch Federkontakte, Steckkontakte, Löten oder Schweißen, beispielsweise Drahtbonden, elektrisch kontaktiert ist oder/und mit seiner Rückseite an einem Befestigungskörper (5) angebracht ist.

11. Siegelorgan nach Anspruch 10, bei dem der Befestigungskörper (5) Bestandteil eines Gehäuses (2) ist, das zur Anbringung an einer Verpackungsmaschine ausgebildet ist.

12. Siegelorgan nach Anspruch 11, bei dem im Innern des Gehäuses (2) eine Steuerungselektronik oder/und eine Leistungselektronik angeordnet ist.

13. Siegelorgan nach einem der vorherigen Ansprüche, bei dem mindestens zwei Heizleiter (7A) mit gleichem Abstand zum Trägersubstrat (6) angeordnet sind oder mindestens zwei Heizleiter (7A) mit unterschiedlichem Abstand zum Trägersubstrat (6) angeordnet sind.

14. Siegelorgan nach einem der vorherigen Ansprüche, bei dem mindestens ein Heizleiter (7A) und ein Sensorleiter (7B) mit gleichem Abstand zum Trägersubstrat (6) angeordnet sind oder mindestens ein Heizleiter (7A) und ein Sensorleiter (7B) mit unterschiedlichem Abstand zum Trägersubstrat (6) angeordnet sind.

15. Siegelorgan nach einem der vorherigen Ansprüche, bei dem mindestens ein Heizleiter (7A) spulenförmig ausgebildet und mit einer Wechselspannung beaufschlagbar ist.
